(19) Europäisches Patentamt
European Patent Office
Office européen des brevets

(11) **EP 1 253 164 B1**

(12) **EUROPEAN PATENT SPECIFICATION**

(45) Date of publication and mention
of the grant of the patent:
**12.12.2007 Bulletin 2007/50**

(51) Int Cl.:
***C08G 65/48*** (2006.01)

(21) Application number: **01201559.0**

(22) Date of filing: **27.04.2001**

(54) **Polyether multiblock copolymer**

Polyether multiblock copolymer

Copolymère multiblocks de polyéther

(84) Designated Contracting States:
**AT BE CH CY DE DK ES FI FR GB GR IE IT LI LU MC NL PT SE TR**

(43) Date of publication of application:
**30.10.2002 Bulletin 2002/44**

(73) Proprietor: **Stichting Dutch Polymer Institute**
**5612 AZ Eindhoven (NL)**

(72) Inventors:
• **Krijgsman, Josien**
**7423 DW Deventer (NL)**

• **Gaymans, Reinoud Jaap**
**7848 PX Enschede (NL)**

(74) Representative: **Prins, Adrianus Willem et al**
**Vereenigde,**
**P.O.Box 87930**
**2508 DH Den Haag (NL)**

(56) References cited:
**EP-A- 0 278 255          EP-A- 0 320 655**
**DE-A- 4 128 147          US-A- 4 619 975**

**Description**

The invention is directed to aryl polyether based multiblock copolymers, more in particular to aryl polyether multiblock copolymers having polyester and/or polyamide segments. In another embodiment the present invention is directed to specific uses of certain multiblock copolymers.

Aryl polyethers, of which poly(2,6-dimethyl-1,4-phenylene ether) is commercially the most important member, form a class of polymers with very good properties. Generally they are amorphous polymers, having excellent properties such as high toughness, high dimensional stability, good flame retardancy and low moisture uptake.

Poly(2,6-dimethyl-1,4-phenylene ether), or PPE as it is commonly called, however, has a very high glass transition temperature (about 215°C). This severely restricts the processability of this polymer that has very good properties such as high toughness, high dimensional stability, good flame retardancy and low moisture uptake. In order to make it better processable, such as by extrusion and injection moulding, PPE is generally blended with polystyrene (GP or HIPS).

Other possibilities for improving the processability would be copolymerisation of the ether with other monomers, or modification of the polymer chain or polymer segments.

Modified PPE has been known already. US-A 5,162,448 discloses ester capped PPE, which is used to form copolymers. US-A 5,153,267 discloses epoxytriazine capped PPE and modifications thereof with polyesters. US-A 4,619,975 described a two-phase polymer with a polyarylether block and liquid crystalline polyester block. DE-A-4,128,147 describes an aromatic copolymer containing a component Ia, being a unit with ether moieties and at one of sulfone sulfoxide, ketone and ionids, a component Ib, being an aromatic acid and component Ic, being an aromatic diol. EP-A-278,255 relates to polymer blends of PPE, a polyester and a polycarbonate. EP 320 655 describes the preparation of a poly(ether-ester) copolymer from PPE and a diacid. Such polymer can be represented by the formula -(-B-Z-)$_n$-.

In US-A 5,880,221 it has been described that it is possible to redistribute an aryl polyether chain, thereby producing PPE oligomers, which are modified with reactive endgroups. This provides a good possibility to introduce modifications into PPE polymer chains, thereby decreasing the glass transition temperature and improving the processability substantially, without sacrificing the good properties of PPE.

In general multi block copolymers are less phase separated if compared to diblock copolymers, as in multiblock copolymers at a certain composition the blocks are shorter. If phase separation is taking place during polymerisation than the polymerisation is more difficult. In a phase separated system the blocks are less miscible and a significant lowering of the PPE glass transition temperature cannot be obtained.

The invention is concerned with novel aryl polyether compounds, based on various blocks of oligomers or polymers, said blocks having been selected form PPE blocks on the one hand and polyester, polyamide and polyester-amide blocks on the other hand. More in particular the present invention is directed to an aryl polyether based multiblock copolymers of the general formula I or II

$$\text{A'-Z'-B-Z-A} \qquad\qquad \text{I}$$

$$\text{-(-Z-B-(-Z-A-)n-)m-} \qquad\qquad \text{II}$$

wherein B denotes a polyphenylene ether segment,
A and A' denote, independently of each other, segments of hydroxyl, amino or hydroxylamino moieties
Z and Z' denote, independently of each other, carboxylic acid moieties having a functionality of 2,
and n and m have a value of at least 1,
having a glass transition temperature of at most 215°C.

It has been found that multiblock copolymers of the above formulae are easy to prepare from readily preparable PPE oligomers and other easily available chemicals, the polymer having a glass transition temperature that is decreased in comparison with PPE itself, while maintaining the good properties of PPE.

The aryl multiblock copolymer of the invention comprises as one of the constituting blocks in the first place a PPE block or multi block. In this respect the term PPE is intended to include the various polyphenylene ethers, including poly(2,6-dimethyl-1,4-phenylene ether). A general description of the various types of polyphenylene ethers has been given in most patents dealing with them, including US-A 5,880, 221, the contents of which enumeration in included herein by way of reference.

Both homopolymer and copolymer PPE are included. The preferred homopolymers are those containing 2,6-dimethyl-1,4-phenylene ether units. Suitable copolymers include random copolymers containing, for example, such units in combination with 2,3,6-trimethyl-1,4-phenylene ether units. Also included are PPE in which coupling agents such as low molecular weight polycarbonates, quinones, heterocycles and formulas undergo reaction in known manner with the hydroxy groups of two PPE chains to produce a higher molecular weight polymer, provided a substantial proportion of free OH groups remains.

The PPE block or multiblock has to be coupled to other blocks. This means that the block has some active endgroups, which are reactive, or modified to make them reactive with the other components of the multiblock copolymer. In the most simple embodiment the copolymer contains one PPE block, said block ideally having reactive endgroups at all ends of the chain. In case of a linear polymer, this would mean two reactive endgroups and if the polymer is branched or star shaped, the number would ideally be higher. In actual practice the methods of modifying aryl polyethers do not yield the theoretically possible functionality. Suitable average functionality of the PPE segments will be between 1.1 and 5, preferably between 1.3 and 3, most preferred between 1.4 and 2. The average (number) molecular weight of the PPE segments is preferably between 500 and 15000, more preferred between 500 and 5000.

In a preferred embodiment the use of a PPE multiblock, i.e the use of a block having the formula III

$$-PPE-(-Z''-PPE-)_p- \qquad\qquad III$$

wherein p has a value of 1-10, PPE is a polyphenylene ether block and Z" is carboxylic acid moiety having a functionality of 2 or more, is contemplated. In order to be able to react the PPE-blocks, it is important that they have been functionalised, so that they can react with the dicarboxylic acid moiety precursor. Accordingly an endgroup modified PPE should be used. One way to obtain an endgroup modification is redistribution of PPE, such as described in US-A 5,880,221. By the selection of the most suitable modifying group, one obtains a PPE segment having a good functionality . Generally bisphenols are used for the redistribution, whereby tetramethyl bisphenolA is a preferred compound.

The phenolic endgroup having low reactivity can be modified before polymerisation into an endgroup with sufficient reactivity. A high reactivity is preferred for the synthesis of high molecular weight copolymers . Possible modifying agents are dicaboxylic acids, esters thereof, and ester chlorides. In a preferred embodiment the PPE segments are modified with a functional acid chloride ester, such as methyl-chlorocarbonyl benzoate, or a comparable compound yielding terephthalic methyl ester endgroups.

The PPE segment or multiblock can be reacted with a suitable compound such as a diol, a hydroxy carboxylic acid, a diamine and the like. In a preferred embodiment a diol is used. Examples of suitable diols are C2-C72 diols, polyalkylene oxide diols (such as those based on ethylene oxide, propylene oxide, tetramethylene oxide and combinations thereof), as well as polyester, polyester amide segments and polycarbonate segments.

In another embodiment the invention is directed to a multiblock polymer having the formula IV

$$Y-Z-(-PPE-(-Z-PPE)_p)-Z-Y \qquad IV$$

wherein Z and PPE are as defined above, p is 0 or 1 or more than 1 and Y is a chloride or a mono-ol or diol residue, phenyl, methyl residue or a dimeric acid residue. This product can suitably be used as an intermediate in the preparation of the multiblock copolymers of the invention. In that case it is important that the Y-groups have an endgroup that can react with suitable other compounds to produce the polymers of the invention.

Products of the formular I-IV can be used as such, in blends, as compatibiliser in blends, filled systems and in reinforced systems.

The products of the present invention can be prepared using the conventional techniques in the art. More in particular the PPE segment can be prepared as described above. The reaction of the PPE segment with the other components constituting the product of the present invention can be done using the conventional reactions, such as esterification, amindation and the like, using conventional reaction conditions. Examples of these reactions and conditions have been given in the following, non limiting examples.

## EXAMPLE 1

The commercial PPE (PPO-803), poly(2,6-dimethyl phenylene ether) used in the redistribution reactions, was obtained from GE Plastics. According to GE PPO-803 has Mn = 11.000 g/mol and 55 $\mu$mol OH/g. This corresponds to a OH functionality of 0.6. The inherent viscosity of the polymers was determined at a concentration of 0.1 g/dl in chloroform at 25°C, in a capillary Ubbelohde 1B. GPC measurements were carried out with polymer solutions in chloroform (5 mg/ml), filtrated via 0.45 $\mu$m Schleicher&Schuell filters. $^1$H NMR spectra were recorded on a Bruker AC 250 spectrometer at 300 MHz using $CDCl_3$ as a solvent. The phenolic OH concentration is determined by titration. Samples for the dynamical mechanical analysis (DMA) test (70x9x2 mm) were prepared on an Arburg H manual injection molding machine. Using a Myrenne ATM3 torsion pendulum at a frequency of approximately 1 Hz the values of the storage modulus G' and the loss modulus G" as a function of the temperature were measured, the maximum of the loss modulus being taken as the glass transition temperature (Tg). The flow temperature (Tflow) was defined as the temperature where the storage modulus reached 1 MPa.

40 Gram PPE is dissolved in 400 ml toluene at 60°C. Subsequently 4 gram (14 mmol) of tetramethyl bisphenolA (TMBPA) is added. The reaction is started by the addition of 0.40 g tetramethyl diphenoquinone (TMDPQ) (1.7 mmol). After 3 hours the reaction mixture is precipitated in a 10-fold excess of methanol. The precipitated polymer is collected by filtration, washed with methanol and dried in a vacuum oven at 50°C. The yield is 94%. The product is called PPE-TMBPA and has 508 $\mu$mol OH/g and a molecular weight of ~3150 g/mol (Table 1).

10 Gram redistributed PPE-TMBPA (5.08 mmol OH) is dissolved in 100 ml toluene at 70°C. Then a 1.5 excess (7.6 mmol, 1.5 gram) of methyl chlorocarbonyl benzoate (MCCB) is added. After 30 minutes a 1.5 excess (to MCCB) tri-ethylamine is added slowly. After 3 hours the reaction mixture is precipitated in a 10-fold excess of methanol. The precipitated polymer is collected by filtration, washed with methanol and dried in a vacuum oven at 50°C. The yield is ~98%. The product is called Z-PPE-Z and has 469 $\mu$mol $OCH_3$/g and a molecular weight of ~3400 g/mol (Table 2). From Z-PPE-Z and dodecanediol (ddd), a polymer having one terephthalic dodecanediol ester unit in between the PPE segments is prepared (-PPE-(Z-ddd-)n-)m, whereby n=1. The polymerization reaction was carried out in a 50 ml glass reactor with a nitrogen inlet and mechanical stirrer. The reactor, containing 10 gram Z-PPE-Z (4.7 mmol $OCH_3$), do-decanediol (0.47 g, 2.35 mmol), 15 ml NMP and catalyst solution (0.23 ml of 0.05 M Ti(i-$OC_3H_7$)$_4$ in m-xylene), was heated in an oil bath to 180 °C. After 30 minutes reaction time, the temperature was raised to 220°C and after another 30 minutes to 250 °C for one hour. The pressure was then carefully reduced (P<20 mbar) to distil off NMP during 30 minutes and then further reduced (P<1 mbar) for 60 minutes. The reaction mixture was a clear liquid. Finally, the vessel was allowed to slowly cool to room temperature whilst maintaining the low pressure. The product has an inherent viscosity of 0.33 dl/g which corresponds to a molecular weight of ~11.000 g/mol (Table 3).

## EXAMPLE 2 and 3

The procedure of example 1 for synthesis of PPE-TMBPA was repeated, only using 5 and 6 grams (17.5 and 21 mmol) of TMBPA respectively (Table 1).

## EXAMPLE 4

The procedure of example 2 was repeated, only using a reaction time of 1 hour (Table 1).

Table 1. PPE-TMBPA products

| EXAMPLE | TMBPA (gram) | Yield (%) | OH content ($\mu$mol/g) | Mn (from OH content) (g/mol) | functionality (from OH content) | Mn (NMR) (g/mol) |
|---|---|---|---|---|---|---|
| 1 | 4 | 94 | 508 | 3150 | 1.60 | 2800 |
| 2 | 5 | 90 | 552 | 2950 | 1.62 | 2600 |
| 3 | 6 | 85 | 574 | 2850 | 1.64 | 2600 |
| 4 | 5 | 91 | 537 | 3000 | 1.62 | 2900 |

## EXAMPLE 5

The procedure of example 1 for synthesis of Z-PPE-Z was repeated using PPE-TMBPA of example 3 (Table 2).

## EXAMPLE 6

The synthesis of Z-PPE-Z can be simplified by performing the redistribution reaction with TMBPA and the end group modification reaction with MCCB in one pot without precipitation between both steps. 40 Gram PPE is dissolved in 400 ml toluene at 60°C. Subsequently 4 gram (14 mmol) of tetramethyl bisphenolA (TMBPA) is added. The reaction is started by the addition of 0.40 gram (1.7 mmol) tetramethyl diphenoquinone (TMDPQ). After 2 hours reaction time, the temperature, is raised to 70°C and a 1.5 excess to the total OH concentration of PPE, TMBPA and TMDPQ (50 mmol, 10 g) of MCCB is added. After 30 minutes a 1.5 excess (to MCCB) tri-ethylamine is added slowly. After 3 hours the reaction mixture is precipitated in a 10-fold excess of methanol. The precipitated polymer is collected by filtration, washed with methanol and dried in a vacuum oven at 50°C. The yield is ~95%. The product is called Z-PPE-Z and has a molecular weight of 2950 g/mol (Table 2). With NMR it was shown that the product of this reaction is the same as in the two-step reaction, except for the molecular weight which is lower for the same amount of TMBPA used.

EXAMPLE 7 and 8

The procedure of example 6 was repeated only using 6 and 8 grams (21 and 28 mmol) of TMBPA for the redistribution.

Table 2. Z-PPE-Z products

| EXAMPLE | reaction type | TMBPA (gram) | Yield (%) | $OCH_3$ Content ($\mu$mol/g) | Mn (from $OCH_3$ content) (g/mol) | Mn (NMR) (g/mol) | functionality NMR (-) |
|---|---|---|---|---|---|---|---|
| 1 | two step | 4 | 98 | 469* | 3400 | 3500 | 1.60 |
| 5 | two step | 6 | 97 | 524* | 3100 | 3150 | 1.64 |
| 6 | one step | 4 | 95 | 674+ | - | 2950 | 1.71 |
| 7 | one step | 6 | 91 | 880+ | - | 2500 | 1.74 |
| 8 | one step | 8 | 87 | 1057+ | - | 2000 | 1.77 |
| * calculated from OH content of starting material | | | | | | | |
| + theoretical maximum $OCH_3$ content that is obtained when all the TMBPA and TMDPQ is incorporated | | | | | | | |

## EXAMPLE 9-15

For other Z-PPE-Z/diol copolymers (C36-diol, PTMO650, PTMO1000, PTMO1400, PTMO2000, PTMO2900 and diethoxylated Bisphenol A (Dianol220®, Akzo, the Netherlands), the polymerization procedure of example 1 was followed (Table 3).

## EXAMPLE 16-18

The polymerization procedure of example 1 was repeated with C36-diol instead of dodecanediol in combination with Z-PPE-Z of example 6-8 (Table 3).

Table 3. -(Z-PPP-Z-diol-)m- copolymers

| EXAMPLE | Z-PPE-Z of example | TMBPA (gram) | Diol | weight% PPE (%) | Inh.visc. (dl/g) | Tg (°C) | Tflow (°C) |
|---|---|---|---|---|---|---|---|
| PPO-803 | - | - | - | 100 | 0.31 | 200 | 222 |
| Z-PPE-Z | 1 | 4 | - | - | 0.19 | - | - |
| 1 | 1 | 4 | dodecanediol | 89 | 0.33 | 170 | 192 |
| 9 | 1 | 4 | C36-diol | 83 | 0.44 | 150 | 185 |
| 10 | 1 | 4 | PTMO650 | 80 | 0.25 | 125 | 160 |
| 11 | 1 | 4 | PTMO1000 | 77 | 0.48 | 115 | 161 |
| 12 | 1 | 4 | PTMO1400 | 69 | 0.66 | 80 | 145 |
| 13 | 1 | 4 | PTMO2000 | 65 | 0.51 | 50 | 113 |
| 14 | 1 | 4 | PTMO2900 | 57 | 0.66 | -40 | 100 |
| 15 | 1 | 4 | Dianol220® | 87 | 0.41 | 185 | 228 |
| 16 | 6 | 4 | C36-diol | 79 | 0.46 | 140 | 180 |

(continued)

| EXAMPLE | Z-PPE-Z of example | TMBPA (gram) | Diol | weight% PPE (%) | Inh.visc. (dl/g) | Tg (°C) | Tflow (°C) |
|---------|--------------------|--------------|------|-----------------|------------------|---------|------------|
| 17 | 7 | 6 | C36-diol | 75 | 0.41 | 135 | 185 |
| 18 | 8 | 8 | C36-diol | 69 | 0.50 | 115 | 190 |

## EXAMPLE 19

The polymerization reaction of Z-PPE-Z/dodecanediol/DMT (dimethyl terephthalate) is described hereafter. This polymer (-Z-PPE-(Z-ddd)n-)m-contains 27 w% PPE and has a terephthalic dodecane ester unit-DMT-(ddd-DMT)$_n$- having a length n of 24. The polymerization reaction was carried out in a 250 ml glass reactor with a nitrogen inlet and mechanical stirrer. The reactor, containing 10 gram Z-PPE-Z (example 5, 4.7 mmol $OCH_3$), dodecanediol (15.6 g, 77 mmol), DMT (14.5 g, 75 mmol), 100 ml toluene and catalyst solution (8 ml of 0.05 M $Ti(i-OC_3H_7)_4$ in m-xylene), was heated in an oil bath to 180 °C. After 30 minutes reaction time, the temperature was raised to 220°C and after another 30 minutes to 250 °C for one hour. The pressure was then carefully reduced (P<20 mbar) during 30 minutes and then further reduced (P<1 mbar) for 60 minutes. Finally, the product was allowed to slowly cool to room temperature whilst maintaining the low pressure. The product has an inherent viscosity of 0.72 dl/g (Table 4).

## EXAMPLE 20

The procedure of example 19 was repeated with 71 w% PPE in the copolymer (Table 4).

## COMPARITIVE EXAMPLE 21

Synthesis of poly(dodecane terephthalate). The polymerization reaction was carried out in a 250 ml glass reactor with a nitrogen inlet and mechanical stirrer. The reactor, containing dodecanediol (20.2 g, 0.10 mol), dimethylterephthalate (19.4 g, 0.10 mol), 100 ml toluene and catalyst solution (10 ml of 0.05 M $Ti(i-OC_3H_7)_4$ in m-xylene), was heated in an oil bath to 180 ° C. After 30 minutes reaction time, the temperature was raised to 220°C and after another 30 minutes to 250 °C for one hour. The pressure was then carefully reduced (P<20 mbar) during 30 minutes and then further reduced (P<1 mbar) for 60 minutes. Finally, the product was allowed to slowly cool to room temperature whilst maintaining the low pressure. The product is poly(dodecane terephthalate). The product has an inherent viscosity of 0.76 dl/g (Table 4).

Table 4. (-Z-PPE-(Z-ddd)n-)m-copolymers

| EXAMPL E | Z-PPE-Z of example | TMBPA (gram) | weight% PPE (%) | Inh.visc. (dl/g) | Tg (°C) | Tflow (°C) |
|----------|--------------------|--------------|-----------------|------------------|---------|------------|
| 21 | - | - | 0 | 0.76 | 0 | 123 |
| 19 | 5 | 4 | 27 | 0.72 | 0 | 130 |
| 20 | 5 | 4 | 71 | 0.65 | 20 | 170 |
| 9 | 5 | 4 | 89 | 0.33 | 170 | 192 |

## EXAMPLE 22

10 Gram PPE-TMBPA (example 1, 5.08 mmol OH) is dissolved in 100 mL toluene at 70°C. Then 0.51 g (2.54 mmol) of terephthaloyl chloride (TCl) is added. After 30 minutes a 1.5 excess (to TCl) tri-ethylamine is added slowly. After 4 hours the reaction mixture is precipitated in a 10-fold excess of methanol. The precipitated polymer is collected by filtration, washed with methanol and dried in a vacuum oven at 50°C. The yield is ~95%. The product (-PPE-Z-)$_p$ has an inherent viscosity of 0.37 dl/g and a molecular weight of ~11000 g/mol.

## EXAMPLE 23

10 Gram PPE-TMBPA (example 1, 5.08 mmol OH) is dissolved in 100 mL toluene at 70°C. Then a 1.5 excess (0.77 g, 3.81 mmol) of terephthaloyl chloride (TCl) is added. After 30 minutes a 1.5 excess (to TCl) tri-ethylamine is added slowly. After 3 hours a 1.5 excess (to TCl) phenol (0.54 g, 5.7 mmol) is added. After 3 hours the reaction mixture is precipitated in a 10-fold excess of methanol. The precipitated polymer is collected by filtration, washed with methanol and dried in a vacuum oven at 50°C. The yield is ~95%. The product is Z-PPE-Z with phenylester end groups. This product can be used in the copolymerization reaction, comparable to Z-PPE-Z (example 1) with methylester end groups.

**EXAMPLE 24 and 25**

From Z-PPE-Z-phenylester (example 23) and dodecanediol or C36-diol, a polymer having one terephthalic dodecanediol ester unit in between the PPE segments is prepared according to the polymerisation procedure of example 1.

**Claims**

1. Aryl polyether based multiblock copolymers, based on various blocks of oligomers or polymers, said blocks having been selected from polyphenylene ether (PPE) blocks on the one hand and polyester, polyamide and polyester-amide blocks on the other hand, of the general formula I or II,

    A'-Z'-B-Z-A          I

    -(-Z-B-(-Z-A-)n-)m-          II

    wherein B denotes a polyphenylene ether segment,
    A and A' denote, independently of each other, segments of hydroxyl, amino or hydroxylamino moieties,
    Z and Z' denote, independently of each other, carboxylic acid moieties having a functionality of 2,
    and n and m have a value of at least 1,
    having a glass transition temperature of at most 215°C.

2. Copolymer according to claim 1, wherein the polyphenylene ether segment B is selected from

    - a polyphenylene ether block, and
    - polyphenylene ether multiblocks of the general formula III

        -PPE-(- Z''- PPE-)p -

    wherein p has a value of 1-10, PPE is a polyphenylene ether block and Z'' is carboxylic acid moiety having a functionality of 2 or more, or a mixture of carboxylic acid moieties.

3. Copolymer according to claim 2, wherein the polyphenylene ether block is obtained by redistribution of polyphenylene ether.

4. Copolymer according to claim 2 or 3, wherein the weight average molecular weight of the polyphenylene ether block PPE is between 500 and 5000.

5. Copolymer according to claims 1-4, wherein the segments A and/or A' are made from hydroxy functionalised segments and selected from

    - alcohols like, mono-ols, diols, polyols
    - polyethers segments, like PEO, PPO or PTMO
    - polycarbonate segments
    - polyesters segments based on diols and diacids and/or lactons, and/or hydroxy-carboxylic acids.
    - segments based on esteramides.

6. Copolymer according to claims 1-4, wherein the segments A and/or A' are made from amine functionalised segments and selected from

    - amines like, mono-amines, diamines, polyamines

- polyether segments like PEO, PPO and PTMO
- polyamide segments based on diamines and diacids and/or lactams, and/or amino-carboxylic acids, and
- segments based on esteramides.

7. Copolymer according to claims 1-6, wherein the average functionality of the polyphenylene ether segment B is between 1.1 and 2.5, preferably between 1.3 and 2.

8. Copolymer according to claims 1-7, wherein the carboxylic acid moieties Z and/or Z' and/or Z" are selected from aliphatic, aromatic, cyclic, and alicyclic carboxylic acids having a functionality of at least 2, such as phthalic acid, terephthalic acid, naphthalic acid.

9. Copolymer according to claims 1-8, wherein the carboxylic acid moieties Z and/or Z' and/or Z" are derived from dicarboxylic acid, dicarboxylic acid chloride or dicarboxylic acid ester.

10. Copolymer according to claims 1-9, wherein the diol moieties are derived from linear or branched diols, more in particular from C2 - C72, preferably C2 - C16 and/or PTMO, and di-ethoxolated Bisphenol A®.

11. Copolymer according to claims 1-10, wherein the diamine moieties are derived from linear or branched diamines C2 - C12.

12. Copolymer according to claims 1-11, wherein n in formula II has a value of 1-5 and is preferably 1-2.

13. Copolymer according to claims 1-12, wherein m in formula II has a value of 1-50 and is preferably 3-15.

14. Use of the multiblock copolymer according to claims 1-13, in blends, as compatibiliser in blends and in composites.


**Patentansprüche**

1. Auf Arylpolyether basierende Multiblock-Copolymere, die auf verschiedenen Blöcken von Oligomeren oder Polymeren basieren, wobei die Blöcke ausgewählt sind aus Polyphenylenether-(PPE-)Blöcken einerseits und Polyester-, Polyamid- und Polyesteramidblöcken andererseits, mit der allgemeinen Formel I oder II

$$A'\text{-}Z'\text{-}B\text{-}Z\text{-}A \qquad\qquad I$$

$$\text{-(-}Z\text{-}B\text{-(-}Z\text{-}A\text{-)n-)m-} \qquad\qquad II$$

wobei B ein Polyphenylenethersegment bezeichnet,
A und A' unabhängig voneinander Segmente von Hydroxyl-, Amino- oder Hydroxylaminoeinheiten bezeichnen,
Z und Z' unabhängig voneinander Carbonsäureeinheiten mit einer Funktionalität von 2 bezeichnen,
und n und m einen Wert von mindestens 1 haben,
aufweisend eine Glasübergangstemperatur von höchstens 215 °C.

2. Copolymer nach Anspruch 1, wobei das Polyphenylenethersegment B ausgewählt ist aus

- einem Polyphenylenetherblock und
- Polyphenylenether-Multiblöcken der allgemeinen Formel III

$$\text{-PPE-(-}Z''\text{-PPE-)p-}$$

wobei p einen Wert von 1 bis 10 aufweist, PPE ein Polyphenylenetherblock ist und Z" eine Carbonsäureeinheit mit einer Funktionalität von 2 oder mehr oder eine Mischung aus Carbonsäureeinheiten ist.

3. Copolymer nach Anspruch 2, wobei der Polyphenylenetherblock durch Umverteilung von Polyphenylenether erhalten wird.

4. Copolymer nach Anspruch 2 oder 3, wobei das Gewichtsmittel des Molekulargewichts des Polyphenylenetherblocks PPE zwischen 500 und 5000 liegt.

**5.** Copolymer nach den Ansprüchen 1 bis 4, wobei die Segmente A und/oder A' aus hydroxyfunktionalisierten Segmenten hergestellt sind und ausgewählt sind aus

- Alkoholen, wie Monoolen, Diolen, Polyolen
- Polyethersegmenten, wie PEO, PPO oder PTMO
- Polycarbonatsegmenten
- auf Diolen und zweiprotonigen Säuren und/oder Lactonen und/oder Hydroxycarbonsäuren basierenden Polyestersegmenten
- auf Esteramiden basierenden Segmenten.

**6.** Copolymer nach den Ansprüchen 1 bis 4, wobei die Segmente A und/oder A' aus aminfunktionalisierten Segmenten hergestellt sind und ausgewählt sind aus

- Aminen, wie Monoaminen, Diaminen, Polyaminen
- Polyethersegmenten, wie PEO, PPO und PTMO
- auf Diaminen und zweiprotonigen Säuren und/oder Lactamen und/oder Aminocarbonsäuren basieren Polyamidsegmenten und
- auf Esteramiden basierenden Segmenten.

**7.** Copolymer nach den Ansprüchen 1 bis 6, wobei die mittlere Funktionalität des Polyphenylenethersegments B zwischen 1,1 und 2,5 liegt, vorzugsweise zwischen 1,3 und 2.

**8.** Copolymer nach den Ansprüchen 1 bis 7, wobei die Carbonsäureeinheiten Z und/oder Z' und/oder Z" ausgewählt sind aus aliphatischen, aromatischen, cyclischen und alicyclischen Carbonsäuren mit einer Funktionalität von mindestens 2, wie beispielsweise Phthalsäure, Terephthalsäure, Naphthalsäure.

**9.** Copolymer nach den Ansprüchen 1 bis 8, wobei die Carbonsäureeinheiten Z und/oder Z' und/oder Z" aus Dicarbonsäure, Dicarbonsäurechlorid oder Dicarbonsäureester abgeleitet sind.

**10.** Copolymer nach den Ansprüchen 1 bis 9, wobei die Dioleinheiten aus linearen oder verzweigten Diolen abgeleitet sind, insbesondere aus C2 bis C72, vorzugsweise C2 bis C16 und/oder PTMO, und diethoxyliertem Bisphenol A®.

**11.** Copolymer nach den Ansprüchen 1 bis 10, wobei die Diamineinheiten aus linearen oder verzweigten Diaminen C2 bis C12 abgeleitet sind.

**12.** Copolymer nach den Ansprüchen 1 bis 11, wobei n in Formel II einen Wert von 1 bis 5 aufweist und vorzugsweise 1 bis 2 ist.

**13.** Copolymer nach den Ansprüchen 1 bis 12, wobei m in Formel II einen Wert von 1 bis 50 aufweist und vorzugsweise 3 bis 15 ist.

**14.** Verwendung des Multiblock-Copolymers nach den Ansprüchen 1 bis 13, in Blends, als Kompatibilisator in Blends und in Kompositen.

**Revendications**

**1.** Copolymères multiséquencés à base d'arylpolyéther, à base de différentes séquences d'oligomères ou de polymères, lesdites séquences ayant été choisies parmi des séquences de polyphénylène-éther (PPE) d'une part et des séquences de polyester, polyamide et polyester-amide, d'autre part, des formules générales I ou II

A'-Z'-B-Z-A        I

$-(-Z-B-(-Z-A-)_n)m$.        II

où B représente un segment polyphénylène-éther,
A et A' représentent, indépendamment l'un de l'autre, des segments d'entités hydroxyle, amino ou hydroxylamino,
Z et Z' représentent, indépendamment l'un de l'autre, des entités acide carboxylique ayant une fonctionnalité de 2,

et n et m ont une valeur d'au moins 1,
ayant une température de transition vitreuse d'au plus 215°C.

2. Copolymère selon la revendication 1, dans lequel le segment B polyphénylène-éther est choisi parmi

   - une séquence polyphénylène-éther, et
   - des multiséquences de polyphénylène-éther ayant la formule générale III

   $$PPE(-Z''-PPE)_p-$$

   dans laquelle p a une valeur de 1-10, PPE est une séquence de polyphénylène-éther et Z" est une entité acide carboxylique ayant une fonctionnalité de 2 ou plus, ou un mélange d'entités acide carboxylique.

3. Copolymère selon la revendication 2, dans lequel la séquence polyphénylène-éther est obtenue par redistribution du polyphénylène-éther.

4. Copolymère selon la revendication 2 ou 3, dans lequel le poids moléculaire moyen en poids de la séquence de polyphénylène-éther PPE se situe dans la gamme allant de 500 à 5000.

5. Copolymère selon les revendications 1 à 4, dans lequel les segments A et/ou A' sont constitués de segments fonctionnalisés hydroxy et choisis parmi

   - des alcools comme des monools, diols, polyols,
   - des segments polyéther comme PEO, PPO ou PTMO,
   - des segments polycarbonate,
   - des segments polyester à base de diols et de diacides et/ou de lactones, et/ou d'acides hydroxycarboxyliques,
   - des segments à base d'ester-amide.

6. Copolymère selon les revendications 1 à 4, dans lequel les segments A et/ou A' sont constitués de segments fonctionnalisés amine et choisis parmi

   - des amines comme des monoamines, diamines, polyamines,
   - des segments polyéther comme PEO, PPO ou PTMO,
   - des segments polyamide à base de diamines et de diacides et/ou de lactames, et/ou d'acides aminocarboxyliques, et
   - des segments à base d'ester-amide.

7. Copolymère selon les revendications 1 à 6, dans lequel la fonctionnalité moyenne du segment B polyphénylène-éther se situe dans la gamme de 1,1 à 2,5, de préférence de 1,3 à 2.

8. Copolymère selon les revendications 1 à 7, dans lequel les entités acide carboxylique de Z et/ou Z' et/ou Z" sont choisies parmi des acides carboxyliques aliphatiques, aromatiques, cycliques et alicycliques, ayant une fonctionnalité d'au moins 2, comme l'acide phtalique, l'acide téréphtalique, l'acide naphtalique.

9. Copolymère selon les revendications 1 à 8, dans lequel les entités acide carboxylique de Z et/ou Z' et/ou Z" dérivent d'acide dicarboxylique, de chlorure d'acide dicarboxylique u d'ester d'acide dicarboxylique.

10. Copolymère selon les revendications 1 à 9, dans lequel les entités diol dérivent de diols linéaires ou ramifiés, plus particulièrement de C2-C72, de préférence de C2-C16 et/ou de PTMO, et du Bisphénol A® diéthoxylé.

11. Copolymère selon les revendications 1 à 10, dans lequel les entités diamine dérivent de diamines linéaires ou ramifiées en C2-C12.

12. Copolymère selon les revendications 1 à 11, dans lequel n dans la formule II a une valeur allant de 1 à 5 et de préférence, de 1 à 2.

13. Copolymère selon les revendications I à 12, dans lequel m dans la formule II a une valeur allant de 1 à 50 et de préférence, de 3 à 15.

**EP 1 253 164 B1**

**14.** Utilisation des copolymères multiséquencés selon les revendications 1 à 13, dans des mélanges, comme agent de compatibilité dans des mélanges et des composites.

**11**

## REFERENCES CITED IN THE DESCRIPTION

**Patent documents cited in the description**

- US 5162448 A
- US 5153267 A
- US 4619975 A
- DE 4128147 A
- EP 278255 A
- EP 320655 A
- US 5880221 A